# FASCICULE DE BREVET EUROPEEN

(11) **EP 0 411 526 B1**
(45) Date de publication et mention de la délivrance du brevet: **14.12.1994**
(21) Numéro de dépôt: 90114567.2
(22) Date de dépôt: 30.07.1990
(51) Int. Cl.: H04L 1/24, H04L 25/49

(54) **Dispositif de correction des distorsions de transmission d'un signal de données en fonction des violations du code de transmission**
Einrichtung zur Korrektur der Übertragungsverzerrungen eines Datensignals in Abhängigkeit von Übertragungskodeverletzungen
Device for the correction of transmission distorsions of a data signal according to transmission code violations

(30) Priorité: 04.08.1989 FR 8910535
(43) Date de publication de la demande: 06.02.1991
(73) Titulaire: ALCATEL BUSINESS SYSTEMS, F-75008 Paris (FR)
(72) Inventeur: Medlicott, Mark, F-67400 Illkirch (FR)
(74) Mandataire: Weinmiller, Jürgen

(56) Documents cités:
- US-A- 3 840 855
- US-A- 3 868 576
- US-A- 4 309 771
- GLOBAL TELECOMMUNICATIONS CONFERENCE, New Orleans, 2-5 décembre 1985, vol. 3 of3, pages 4351-4355; E.V. JONES et al.: "Pre-transmission signal shaping andcoding for local digital lines"

## Description

Le domaine de l'invention est celui des dispositifs de correction applicables à un signal numérique, à l'émission ou à la réception, pour compenser des distorsions introduites par le canal de transmission.

La présente invention a été élaborée plus particulièrement en relation avec des applications de transmission sur paires de fils torsadés, du type utilisable dans des liaisons privées où les câbles ont des caractéristiques variables, où le niveau des distorsions est élevé, et où les portées sont relativement courtes (de l'ordre de quelques centaines à quelques milliers de mètres).

Toutefois, la portée de la présente invention s'étend clairement à d'autres conditions de transmission, sur tout type de support et de longueur de transmission.

Dans le cas où le support de transmission est constitué par une paire de fils torsadés, la fonction de transfert du canal de transmission provoque une atténuation des hautes fréquences, à cause de l'augmentation de la résistance des fils à ces fréquences (effet de peau). Il en résulte un phénomène d'interférence intersymbole, dû au fait que la queue de chaque symbole perturbe la détection d'au moins un symbole suivant.

On connaît des moyens de corriger l'interférence intersymbole, notamment en utilisant des dispositifs d'égalisation du signal reçu. L'opération d'égalisation a pour objectif de corriger les fonctions de transfert du câble, en insérant dans la chaîne de réception un module présentant une fonction de transfert inverse de celle du câble dans la bande utile. Ainsi, dans le cas d'une paire de fils torsadés, l'égalisateur pourra assurer une expression des composantes haute fréquence dans le signal reçu.

Toutefois, la nature et l'intensité des distorsions affectant le canal de transmission peuvent varier dans le temps, ainsi qu'en fonction des communications établies (distance séparant les terminaux communicants caractéristique des lignes de transmission, ... ).

L'objectif de la présente invention est de fournir des moyens permettant de choisir automatiquement un niveau d'égalisation adapté à la fonction de transfert du câble, pour la transmission courante. D'une manière plus générale, la présente invention a pour objectif de fournir un système de correction autoadaptatif des distorsions induites dans le canal de transmission ;les moyens de correction ne se limitent pas à la mise en oeuvre de moyens d'égalisation , mais peuvent être constitués par d'autres systèmes comme on le verra plus loin.
Le document US-A-3 840 855 décrit un sélecteur pour ligne de transmission de données qui permet d'insérer successivement des correcteurs en ligne durant des temps égaux au cours d'une phase de choix pour mesurer les erreurs affectant le signal de données reçu qui sont détectées avec chacun d'entre eux, afin de choisir l'un d'entre eux. Un dispositif logique associé à un détecteur d'erreurs de code bipolaire permet de comptabiliser le nombre d'erreurs détectées pour chacun des correcteurs et de commander la commutation en ligne de celui pour lequel un nombre minimal d'erreurs a été comptabilisé en phase de choix.
On connaît des techniques de correction autoadaptative. On connaît par exemple un principe de correction fondé sur la mesure du niveau de crête du signal reçu. Ce type de technique est bien adapté dans le cas où on peut établir un rapport constant entre l'affaiblissement du signal et la distorsion. Toutefois, cette technique n'est pas généralisable à tous les types de câbles, à tous les types de transmission et à toutes les distorsions.
On connaît des systèmes d'égalisation autoadaptatifs mettant en oeuvre des techniques de filtrage numérique. Ces techniques sont toutefois relativement complexes à mettre en oeuvre, en nécessitant par exemple l'utilisation d'algorithmes de calcul de coefficients de filtrage à itérations multiples coopérant notamment avec des filtres de type "filtre transversal" comprenant des jeux de cellules de retard sélectivement activables.
L'objet de l'invention est de fournir des moyens de correction autoadaptatifs des distorsions induites dans le signal reçu, dont la mise en oeuvre soit simple, à partir de critères immédiatement disponibles par analyse du signal reçu. Un autre objectif de l'invention est de fournir un tel dispositif de correction autoadaptatif compatible avec divers types de canaux de transmission et de codes de transmission de signaux numériques.
L'invention propose donc un dispositif de correction des distorsions de transmission d'un signal de données transmis au moyen d'un code à logique interne permettant la détection des violations de code affectant le signal à la réception, après transmission.
Selon une caractéristique de l'invention, ce dispositif comporte des moyens pour détecter les violations de code affectant le signal après transmission, des moyens de correction du signal reçu pour réduire les distorsions de transmission et des moyens pour régler les moyens de correction en fonction des violations détectées.

D'autres caractéristiques et avantages de l'invention apparaîtront à la lecture de la description suivante d'un mode de réalisation préférentiel de l'invention, donné à titre illustratif et non limitatif, et des dessins annexés dans lesquels :
- la figure 1 est un schéma illustrant le principe du code AMI, compatible avec le dispositif de correction autoadaptatif de l'invention ;
- les figures 2 et 3 sont des chronogrammes illustrant des formes d'ondes de signaux émis, et reçus sans égalisation (fig.2) ou avec égalisation excessive (fig.3), permettant de mettre en évidence des violations du code AMI utilisé pour la transmission ;
- la figure 4 est un schéma d'un circuit avantageux de mise en oeuvre d'un dispositif de correction par sélection de niveau d'égalisation, à la réception, selon l'invention ;
- la figure 5 est un schéma illustrant le principe de correction par précompensation à l'émission, à partir d'une détection des violations de code à la réception, dans un même terminal émetteur/récepteur, selon l'invention;
- les figures 6A, 6B, 6C représentent des formes d'onde précompensée, à impulsion tronquée (fig.6B) ou à front arrière décroissant (fig.6C), correspondant à un symbole créneau (figure 6A), pour la correction à l'émission d'un signal numérique en fonction de la détection de violation de code effectuée au récepteur.

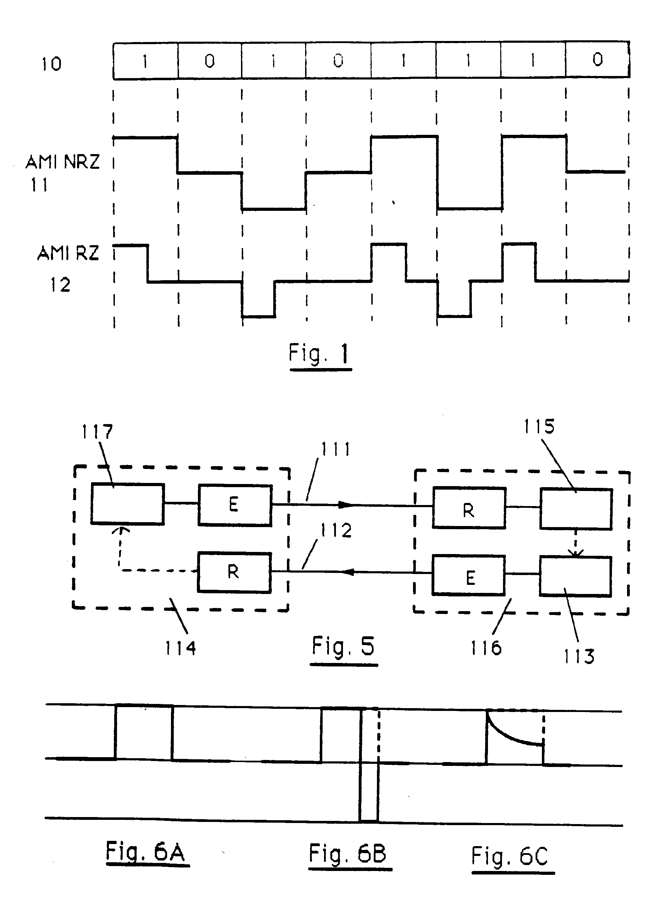

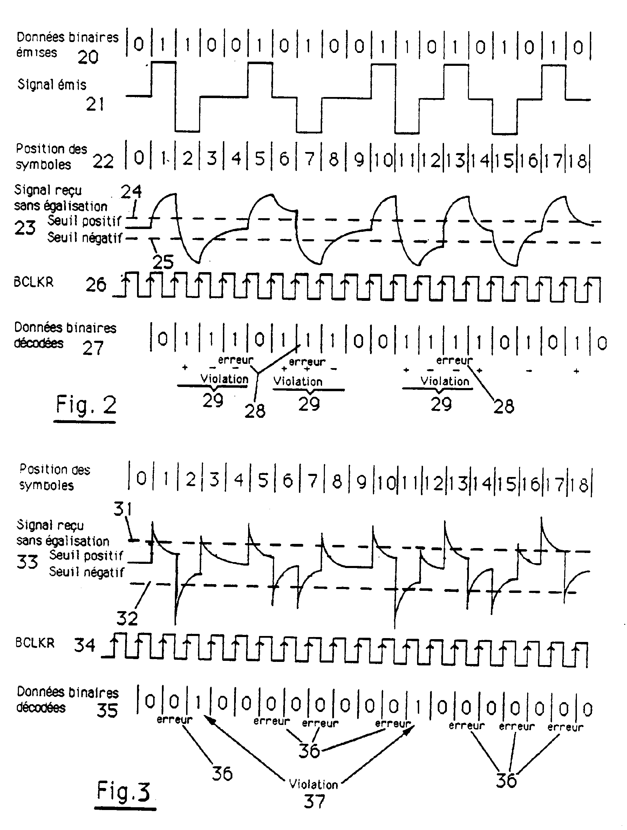

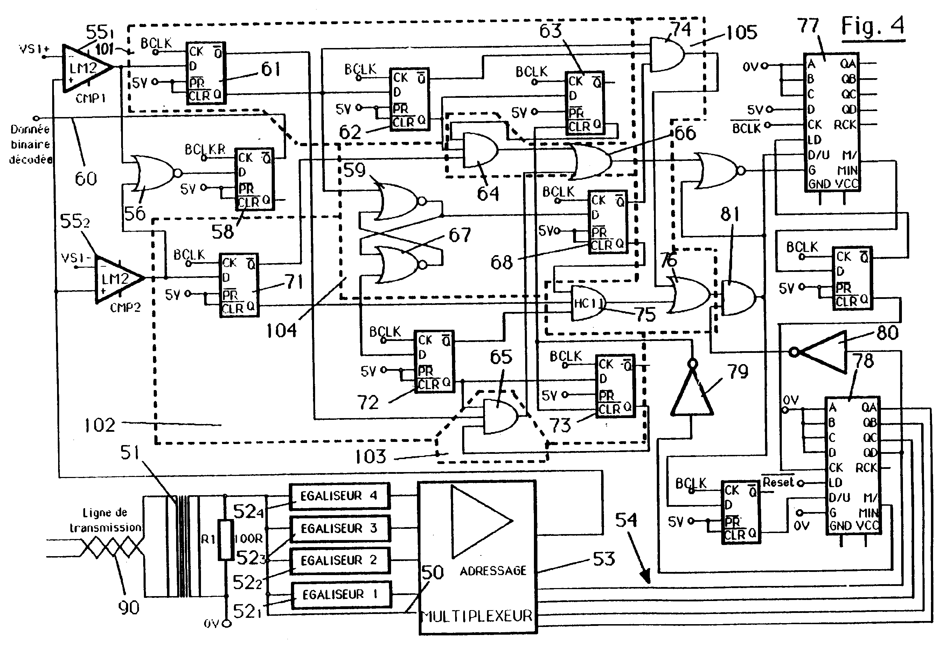

Le mode de réalisation décrit ci-après se rapporte plus particulièrement à un système de transmission sur paire de fils torsadés, utilisant le code AMI. Comme on peut le voir en figure 1, il existe deux types de code AMI :
- le code AMI NRZ ; ce code assure le codage de l'état logique 0 par une tension de 0 Volt, et de l'état logique 1 par une tension qui est alternativement positive et négative. Ce code a un spectre comprenant un premier 0 à la fréquence bit, et une composante continue nulle ;
- le code AMI RZ ; ce code assure un codage de l'état logique 0 par une tension de 0 Volt, et de l'état logique 1 par une impulsion qui est alternativement positive et négative, et qui dure la première moitié d'un intervalle de temps. Ce code présente un spectre avec le premier 0 à une fréquence égale à la fréquence bit, et une composante continue nulle, comme le code AMI NRZ.

La figure 1 présente l'aspect respectif d'un codage AMI NRZ (11), et d'un codage AMI RZ (12), appliqué à une même séquence binaire 10.

Les exemples présentés ci-après se rapportent plus particulièrement au code AMI NRZ.

La figure 2 illustre le phénomène de distorsion d'un signal émis selon le code NRZ. Le chronogramme présente les informations suivantes :
- données binaires émises : 20 ;
- signal émis : 21 ;
- numérotation des symboles émis : 22 ;
- forme du signal reçu sans égalisation : 23. On a représenté sur le signal reçu 23 les seuil positifs 24 et négatifs 25 de détection du signal à la réception ;
- signal d'horloge BCLKR : 26;
- données binaires décodées, à la réception : 27. On a repéré, dans la séquence de données binaires décodée 27, les erreurs 28 par rapport aux données émises 20, ainsi que les violations 29 du code AMI.

La première violation 29 repérable dans les données binaires décodées 27 est la détection de deux impulsions négatives successives (symboles 2 et 3). Ceci est dû au fait que le symbole numéro 2 perturbe la détection du symbole numéro 3, du fait des distorsions introduites dans le canal de transmission, le symbole numéro 3 étant alors détecté comme une impulsion négative au lieu d'une tension de 0 volt. Dans ce cas, la violation du code permet donc d'annoncer l'erreur de détection.

Selon l'invention, c'est la détection des violations du code qui est utilisée pour régler ou commuter les moyens de correction, notamment d'égalisation, dans le récepteur.

La figure 3 illustre qu'une égalisation excessive du signal reçu peut être également la cause de distorsion intersymbole, et donc d'erreurs de transmission. Les différents signaux représentés en figure 3 sont les suivants :
- forme du signal reçu 33, avec égalisation excessive, correspondant au signal émis 21. On a également représenté sur le signal reçu 33 les seuils positif 31 et négatif 32 de détection de la valeur des impulsions ;
- horloge de réception 34 ;
- données binaires décodées 35. Dans la séquence de données 35, on a repéré les erreurs 36 de décodage par rapport aux données binaires émises, ainsi que la détection d'une violation 37 du code AMI, par détection de deux impulsions négatives entre lesquelles aucune impulsion positive n'a été décodée.

On remarquera que les violations de code, dans le cas d'une égalisation excessive, ne sont pas les mêmes que dans le cas d'une égalisation insuffisante. Une violation détectée du type 0++, 0--, +++ ou --- est caractéristique d'une égalisation insuffisante. En revanche, une violation constituée par la succession de deux impulsions de même polarité séparées par un ou plusieurs 0 (par exemple +0+, ou -0000-), est caractéristique d'une égalisation excessive.

Le dispositif représenté en figure 4 permet de prendre en compte les deux types de violation (égalisation insuffisante, et égalisation excessive), pour commuter ou régler le niveau d'égalisation, et par conséquent accentuer plus ou moins les hautes fréquences dans l'exemple retenu.

Dans ce cas, les cellules d'égalisation sont constituées par des filtres passe-haut de valeurs de coupure distinctes.

Pour que les deux types de séquences binaires qui génèrent les deux types de violation soient équiprobables, la séquence binaire est brouillée avant d'être codée et mise en ligne.

On va maintenant décrire le dispositif de la figure 4.

Le signal reçu de la ligne de transmission 90 passe à travers le transformateur de ligne 51 et il est ensuite appliqué aux entrées des quatre égaliseurs 52₁, 52₂, 52₃, 52₄. Un multiplexeur 53 sélectionne une des sorties des quatre égaliseurs 52ᵢ selon l'adresse 54 appliquée par le système de détection des violations. Le multiplexeur 53 peut également choisir le signal sans égalisation. L'accentuation des hautes fréquences croît de l'égaliseur 52₁ à l'égaliseur 52₄. Le signal en sortie du multiplexeur est appliqué aux entrées des deux comparateurs 55₁ (CMP1) et 55₂ (CMP2). Le comparateur 55₁ détecte les impulsions positives et le comparateur 55₂ détecte les impulsions négatives. Les seuils de détection VS₊ et VS₋ respectivement des deux comparateurs sont placés automatiquement à la moitié de la tension crête des impulsions positives et négatives reçues. Les deux sorties de ces comparateurs 55₁, 55₂ sont combinées dans la porte OU 56. La sortie de cette porte 56 est échantillonnée dans la bascule 58 par l'horloge BCLKR. L'horloge BCLKR est l'horloge bit récupérée du signal en ligne par une boucle de verrouillage de phase. Elle échantillonne la sortie 56 au point où la distorsion intersymbole est minimale. La sortie 60 de la bascule 58 est le signal binaire (signal décodé).

Les bascules 61, 62, 63 forment un registre à décalage 101 qui mémorise la présence ou l'absence d'une impulsion positive pendant l'intervalle de temps courant, et les deux intervalles de temps précédents. Ces bascules sont pilotées par l'horloge qui est synchrone avec l'horloge BCLKR mais avancée de l'ordre d'un quart de cycle pour accentuer l'influence de la distorsion intersymbole. Ceci permet un réglage plus fin de l'égalisation. Les bascules 71, 72, 73 mémorisent, de la même manière, la présence ou l'absence des impulsions négatives, en formant un registre à décalage 102.

Les portes 64, 65 et 66 forment un module 103 de décodage des séquences 0++, 0--, +++ et ---. Ces séquences contiennent les violations caractéristiques d'une égalisation insuffisante. Les portes 67 et 59 forment une bascule R/S qui, en combinaison avec la bascule 68 constituent un module 104 de stockage de la polarité de la dernière impulsion reçue. Les portes 74, 75 et 76 forment un module 105 de décodage des séquences de deux impulsions de la même polarité séparées par un ou plusieurs zéros. Ces séquences sont caractéristiques d'une égalisation excessive.

Le compteur-décompteur 77 est chargé avec la valeur 8 au départ.

Si une violation est détectée qui est caractéristique d'une égalisation insuffisante, la valeur du compteur-décompteur est incrémentée.

Si une violation caractéristique d'une égalisation excessive est détectée la valeur du compteur-décompteur est décrémentée.

Dès que le compteur-décompteur arrive à sa valeur maximum ou minimum, le compteur est rechargé avec la valeur 8. Ce système évite les commutations intempestives entre les différents égaliseurs à cause du bruit.

Quand le compteur 77 arrive à sa valeur maximum, le compteur-décompteur 78 est incrémenté. Inversement, quand le compteur-décompteur 77 arrive à sa valeur minimum, le compteur-décompteur 78 est décrémenté.

Comme déjà noté, les sorties du compteur-décompteur 78 adressent le multiplexeur 53 qui sélectionne soit une sortie des quatre égaliseurs 52₁, 52₂, 52₃, 52₄, soit le signal de ligne 50 sans égalisation. Le système reste stable dès qu'une cellule d'égalisation est sélectionnée qui ne produit pas des violations de code.

Les portes 79, 80 et 81 évitent que le compteur ne dépasse la valeur zéro quand il décompte ou la valeur 4 quand il compte. La sortie du compteur 78 peut être utilisée pour le réglage d'un seul égaliseur variable.

Dans un autre mode de réalisation illustré en figure 5, le détecteur de violation de code 115 d'un terminal 116 émetteur/récepteur sert pour le réglage d'un circuit de correction d'émission 113 dans le sens inverse. Dans ce dernier cas, le système émetteur/récepteur distant 114 doit être informé par un canal de signalisation (préférentiellement sur le même lien physique) de l'égalisation sélectionnée par le système d'émission/réception 116 local pour que le même degré de correction soit choisi pour les deux sens de transmission 111,112. Le système E/R distant 114 est par exemple un PABX, dialoguant avec le terminal 116. Lors de l'appel du terminal 116 par le PABX 114, le détecteur de viols 115 commande la sélection de l'égalisation 113. La ligne 112 transmet alors l'information du niveau d'égalisation sélectionné au PABX 114, pour piloter l'égaliseur 117 de l'émetteur du PABX.

Le circuit de correction 113 est par exemple un circuit de génération de symboles précompensés, du type représenté en fig.6B ou 6C. Un dispositif de génération d'un code AMI modifié du type de la fig.6B est protégé par une demande de brevet conjointe au nom du même déposant.

Dans une variante de réalisation, on peut envisager également un système qui compte les violations détectées en sortie de plusieurs égaliseurs et qui sélectionne l'égaliseur qui produit le nombre minimum de violations.

Enfin, la détection des violations peut être utilisée pour d'autres fonctions, telle que le réglage des seuils des comparateurs de détection.

## Revendications

1. Dispositif de correction des distorsions de transmission d'un signal de données transmis au moyen d'un code à logique interne permettant la détection des violations de code affectant le signal à la réception, après transmission, comportant des moyens (103, 105, 115) pour détecter les violations de code affectant le signal après transmission, des moyens de correction du signal reçu pour réduire les distorsions de transmission et caractérisé en ce qu'il comporte de surcroît des moyens (113, 117) pour régler les moyens de correction en fonction des violations détectées.

2. Dispositif de correction selon la revendication 1, caractérisé en ce que le code à logique interne est le code AMI.

3. Dispositif de correction selon l'une des revendications 1 et 2, caractérisé en ce que les moyens de correction sont constitués de cellules de correction (52₁ à 52₄) qui sont sélectivement commutées suivant la quantification d'une information fournie par les moyens pour détecter les violations de code.

4. Dispositif de correction selon l'une quelconque des revendications 1 à 3, caractérisé en ce que, dans le cas où le signal de données codé est composé d'échantillons susceptibles de prendre deux états distincts d'un état zéro, il comporte au moins deux moyens pour détecter les violations de code, qui sont affectés chacun à la détection de l'un des deux dits états distincts.

5. Dispositif de correction selon l'une quelconque des revendications 1 à 4, caractérisé en ce que les moyens pour détecter les violations de code comprennent des premiers moyens (103) pour détecter les séquences numériques reçues représentatives d'une correction insuffisante et des seconds moyens (101) pour détecter les séquences numériques reçues représentatives d'une correction excessive.

6. Dispositif de correction selon la revendication 5, caractérisé en ce qu'il comporte des moyens (77) pour absorber les bruits du canal de transmission, par compensation des détections rapprochées de séquences représentatives d'une correction insuffisante et de séquences représentatives d'une correction excessive.

7. Dispositif de correction selon l'une quelconque des revendications 1 à 6, caractérisé en ce qu'il comporte des moyens (113) de correction d'un signal, émis au sein d'un terminal émetteur-récepteur le comportant, qui sont pilotés par les moyens (115) pour détecter les violations de code dont il est doté.

8. Dispositif de correction selon la revendication 7, caractérisé en ce qu'il comporte un canal pour la communication des moyens de correction dont il est doté dans le terminal qui le comporte avec ceux d'un terminal distant.

## Patentansprüche

1. Vorrichtung zur Korrektur von Übertragungsverzerrungen eines mit Hilfe eines internen logischen Kodes übertragenen Datensignals, der eine Erfassung von Kodeverletzungen in dem empfangenen Signal nach der Übertragung erlaubt, wobei die Vorrichtung Mittel (103. 105, 115) zur Erfassung der Verletzungen der Koderegel im Signal nach der Übertragung und Mittel zur Korrektur des empfangene Signals zur Verringerung der Übertragungsverzerrungen aufweist, dadurch gekennzeichnet, daß die Vorrichtung weiter Mittel (113, 117) aufweist, um die Korrekturmittel abhängig von den erfaßten Verletzungen der Koderegel zu steuern.

2. Korrekturvorrichtung nach Anspruch 1, dadurch gekennzeichnet, daß der logische interne Kode der Kode AMI ist.

3. Korrekturvorrichtung nach einem der Ansprüche 1 und 2, dadurch gekennzeichnet, daß die Korrekturmittel aus Korrekturzellen (52₁ bis 52₄) bestehen, die selektiv je nach der Quantifizierung einer von den Mitteln zur Erfassung der Verletzungen der Koderegel gelieferten Information umgeschaltet werden.

4. Korrekturvorrichtung nach einem beliebigen der Ansprüche 1 bis 3, dadurch gekennzeichnet, daß für den Fall, daß das kodierte Datensignal aus Tastproben besteht, die zwei vom Zustand Null unterschiedliche diskrete Zustände annehmen können, die Vorrichtung mindestens zwei Mittel aufweist, um die Verletzungen der Koderegel zu erfassen, wobei diese beiden Mittel je der Erfassung eines der beiden diskreten Zustände zugeordnet ist.

5. Korrekturvorrichtung nach einem beliebigen der Ansprüche 1 bis 4, dadurch gekennzeichnet, daß die Mittel zur Erfassung der Verletzungen der Koderegel erste Mittel (103), um die für eine unzureichende Korrektur repräsentativen empfangenen Digitalfolgen zu erfassen, und zweite Mittel (101) aufweisen, um die für eine exzessive Korrektur repräsentativen empfangenen Digitalfolgen zu erfassen.

6. Korrekturvorrichtung nach Anspruch 5, dadurch gekennzeichnet, daß sie Mittel (77) zur Absorption des Rauschens des Übertragungskanals durch Kompensation der Erfassung von sehr nahe beieinanderliegenden Folgen, die für eine unzureichende Korrektur repräsentativ sind, und von sehr nahe beieinanderliegenden Folgen aufweist, die für eine exzessive Korrektur repräsentativ sind.

7. Korrekturvorrichtung nach einem beliebigen der Ansprüche 1 bis 6, dadurch gekennzeichnet, daß sie Mittel (113) zur Korrektur eines Signals aufweist, das von einem Sender-/Empfangsendgerät ausgesendet wird, wobei diese Mittel durch die Mittel (115) zur Erfassung der Verletzungen der Koderegel gesteuert werden, die in dem Endgerät vorhanden sind.

8. Korrekturvorrichtung nach Anspruch 7, dadurch gekennzeichnet, daß sie einen Kanal aufweist, um einem entfernten Endgerät die Korrekturmittel mitzuteilen, die das erste Endgerät anwendet.

## Claims

1. Device for correcting transmission distortion of a data signal transmitted by means of a code with internal logic enabling detection of code violations affecting the received signal, after transmission, comprising means (103, 105, 115) for detecting code violations affecting the signal after transmission, means for correcting the received signal to reduce the transmission distortion and characterised in that it further comprises means (113, 117) for adjusting the corrector means according to the violations detected.

2. Corrector device according to claim 1 characterised in that the internal logic code is the AMI code.

3. Corrector device according to claim 1 or claim 2 characterised in that the corrector means comprise corrector cells (52₁ through 52₄) which are selectively switched according to information supplied by the means for detecting code violations.

4. Corrector device according to any one of claims 1 to 3 characterised in that if the coded data signal is made up of samples able to assume two states different from a zero state, it comprises at least two means for detecting code violations each assigned to detection of one of said two separate states.

5. Corrector device according to any one of claims 1 to 4 characterised in that the means for detecting code violations comprise first means (103) for detecting digital sequences received representative of insufficient correction and second means (101) for detecting digital sequences received representative of excessive correction.

6. Corrector device according to claim 5 characterised in that it comprises means (77) for absorbing transmission channel noise by compensating close detection of sequences representative of insufficient correction and sequences representative of excessive correction.

7. Corrector device according to any one of claims 1 to 6 characterised in that it includes means (113) for correcting a signal transmitted within a transmitter/receiver terminal including it controlled by its means (115) for detecting code violations.

8. Corrector device according to claim 7 characterised in that it includes a communication channel for its corrector means in the terminal which includes it for communication with those of a remote terminal.
